# EUROPÄISCHE PATENTSCHRIFT

(11) **EP 1 050 617 B1**
(45) Veröffentlichungstag und Bekanntmachung des Hinweises auf die Patenterteilung: **18.08.2004**
(21) Anmeldenummer: 00108557.0
(22) Anmeldetag: 19.04.2000
(51) Int. Cl.: D06F 37/00

(54) **Haushaltgerät**
Domestic appliance
Appareil ménager

(30) Priorität: 30.04.1999 DE 19919947
(43) Veröffentlichungstag der Anmeldung: 08.11.2000
(73) Patentinhaber: BSH Bosch und Siemens Hausgeräte GmbH, 81739 München (DE)
(72) Erfinder: Nitsche, Alfred, 13351 Berlin (DE)

(56) Entgegenhaltungen:
- US-A- 5 269 159
- PATENT ABSTRACTS OF JAPAN vol. 2000, no. 18, 5. Juni 2001 (2001-06-05) & JP 05 146584 A (SAMSUNG ELECTRONICS CO LTD), 15. Juni 1993 (1993-06-15)
- PATENT ABSTRACTS OF JAPAN vol. 016, no. 524 (C-1000), 28. Oktober 1992 (1992-10-28) & JP 04 197293 A (MATSUSHITA ELECTRIC IND CO LTD), 16. Juli 1992 (1992-07-16)
- PATENT ABSTRACTS OF JAPAN vol. 012, no. 384 (M-753), 13. Oktober 1988 (1988-10-13) & JP 63 135629 A (NIPPON KOKAN KK), 8. Juni 1988 (1988-06-08)

## Beschreibung

Die vorliegende Erfindung betrifft ein Haushaltgerät, insbesondere Waschmaschine, Waschtrockner oder Trockner, mit einem Gehäuse, in dem eine drehbar gelagerte Trommel zur Aufnahme von zu behandelndem Wäschegut und ein die Trommel umgebender Mantel vorgesehen ist, wobei innerhalb des Trommelmantels Waschlauge zu- und/oder abführbar ist

Derartige Haushaltgeräte weisen ein Gehäuse auf, in dem eine drehbar gelagerte Trommel zur Aufnahme von zu behandelndem Wäschegut und ein die Trommel umgebender Trommelmantel vorgesehen ist, wobei innerhalb des Trommelmantels Waschlauge zu- und abführbar ist.

Bei herkömmlichen derartigen Haushaltgeräten wird die Trommel mittels eines elektrischen Antriebs mit einer vorbestimmten Drehzahl und Drehrichtung angetrieben.

Der Trommelmantel ist im Gehäuse über Federn und Schwingungsdämpfersysteme gelagert, wobei bei höheren Drehzahlen der Trommel, beispielsweise beim Wäscheschleudern, aufgrund von Unwuchten, die allein schon dadurch entstehen, dass die Wäsche in der Trommel am Umfang ungleich verteilt anliegt, entsprechende Schwingungen erzeugt werden. Diese Schwingungen werden von Schwingungsdämpfern in Grenzen gehalten.

Aufgrund der Schwingungen und der für deren Auffangen notwendigen Schwingungsdämpfersystemen ergibt sich eine nachteilige Energiebilanz bei den Haushaltgeräten des Standes der Technik. Durch die Schwingungsdämpfer wird die zuvor über einen Elektromotor aufgebrachte Leistung wieder vernichtet, wodurch ein erhöhter Energieverbrauch benötigt wird. Weiterhin werden durch die Schwingungen Vibrationen in dem Haushaltgerät erzeugt, die sich nachteilig auf deren einzelne Komponenten auswirken können. Zudem entstehen durch die Schwingungen zusätzliche Geräusche.

Daher sind zwar bereits Versuche unternommen worden, diese Probleme zu beseitigen. Durch JP 05 146 584 A, US 5 269 159 A und JP 04 197 293 A dann auch schwingende Systeme für Waschmaschinen bekannt geworden, bei denen diskrete Reibungsstoßdämpfer durch paarweise Anordnungen von Magneten, zum Teil sogar von aufgrund von Sensorsignalen gesteuerten Elektromagneten ersetzt worden sind. Dennoch sind diese schwingenden Systeme durch mechanische Aufhängungen mit den sie umgebenden Gehäusen verbunden und übertragen daher immer noch auf geräuschvolle Weise energieverzehrende Schwingungen auf die Gehäuse.

Der vorliegenden Erfindung liegt deshalb die Aufgabe zugrunde ein Haushaltgerät der eingangs genannten Art derart zu verbessern, dass ein verringerter Energieverbrauch des Haushaltgeräts, insbesondere bei hohen Drehzahlen der Trommel erreicht wird und ein ruhigerer Betrieb des Haushaltgeräts, insbesondere bei hohen Drehzahlen der Trommel erreicht wird.

Diese Aufgabe wird erfindungsgemäß dadurch gelöst, dass der Trommelmantel mittels einer Magnetschwebeanordnung berührungsfrei in dem Gehäuse gelagert ist. Dadurch wird erreicht, dass mechanische Dämpfereinrichtungen und Aufhängungen für das schwingende System zur Dämpfung der Schwingungen der Trommel entfallen können, was zu einem niedrigeren Energieverbrauch führt. Aufgrund der berührungsfreien Lagerung werden mechanische Kräfte von dem Trommelmantel nicht mehr über eine mechanische Lagerung auf das Gehäuse und andere Bauteile übertragen, was sich insbesondere in höherer Laufruhe vorteilhaft äußert.

Die Ausführung der berührungsfreien Lagerung als Magnetschwebelagerung weist außerdem den Vorteil kleiner Baugröße für die Lagerung auf. Insbesondere kann der Durchfederungsweg gegenüber herkömmlichen mechanischen Schwingungsdämpfungssystemen deutlich verringert werden, wodurch insgesamt auch eine geringere Baugröße des Haushaltgeräts erreicht wird. Zudem erfolgt die Schwingungsdämpfung praktisch verzögerungsfrei, wodurch die ruhigere Betriebsweise des Haushaltgeräts insbesondere im Schleuderbetrieb weiter gesteigert wird. Zudem lassen sich erheblich höhere Schleuderdrehzahlen erzielen, wodurch wiederum der Schleudervorgang selbst verkürzt werden kann.

Weiterhin sinken die Anforderungen an die Vibrationsfestigkeit der einzelnen Bauteile des Haushaltgeräts erheblich, wodurch sich beispielsweise geringere Abmessungen der einzelnen Komponenten erzielen lassen.

Mit Vorteil weist die Magnetschwebeanordnung der berührungsfreien Lagerung wenigstens drei, bevorzugt vier Magnetanordnungen auf. Diese sind vorteilhafterweise gleichmäßig am Umfang verteilt angeordnet.

Vorteilhafterweise ist jede Magnetanordnung mit wenigstens zwei Magneten versehen, wodurch die berührungsfreie Lagerung auf besonders einfache Weise realisiert wird. Dabei ergibt sich auch der besondere Vorteil eines äußerst geringen notwendigen Durchfederungsweges, d. h. der Spalt zwischen den beiden Magneten kann sehr gering dimensioniert werden.

Vorteilhafterweise sind die beiden Magnete einer Magnetanordnung derart ausgebildet, daß sie sich voneinander abstoßen. Dadurch wird sichergestellt, daß eine Berührung der beiden Magnete nicht erfolgt und stets ein Luftspalt zwischen den beiden Magneten die berührungsfreie Lagerung sicherstellt.

In einer bevorzugten Ausführungsform ist einer der Magnete der Magnetanordnung mit dem Trommelmantel verbunden und der andere ist mit dem Gehäuse verbunden. In einer weiteren bevorzugten Ausführungsform ist der Abstand der beiden Magnete einer Magnetanordnung voneinander einstellbar. Diese Einstellbarkeit kann beispielsweise vom Gewicht der Trommel abhängen, also beispielsweise von der Füllung der Trommel mit Wäsche und der zeitlichen Abhängigkeit der Füllung der Trommel mit Lauge. Die Änderung des Abstandes kann auch den unterschiedlichen Betriebszuständen angepaßt werden, beispielsweise größerer Abstand im Betriebszustand "Schleudern".

In einer alternativen Ausführungsform kann eine Magnetanordnung zwei Paare von Magneten aufweisen, die in Richtung der Drehachse der Trommel beabstandet voneinander angeordnet sind. Dadurch wird die Stabilität der berührungsfreien Lagerung in Achsrichtung der Trommel erhöht.

Dabei werden die Magnetanordnungen vorteilhafterweise unter einem Winkel zueinander angeordnet.

In einer besonders vorteilhaften Weiterbildung der Erfindung sind die oder einTeil der Magnete fremdgespeiste Elektromagnete. Auf diese Weise lassen sich nämlich die Feldstärken der einzelnen Magnete bzw. Magnetpaare so steuern bzw. regeln, daß bei allen auf die Lagerung einwirkenden Kräften sofort durch geeignete Gegensteuerung an den Elektromagneten die jeweilige Federungshärte bzw. der Dämpfungsgrad angepaßt werden kann. Dies kann unter Messung der in den Spulen der Elektromagnete auftretenden Gegenspannungen durch eine elektronische Meß- und Regelungseinrichtung praktisch verzögerungsfrei realisiert werden. Der Vorteil dieser Variante liegt insbesondere darin, daß nun nicht mehr wie bei mechanischen Federungen und Dämpfungen eine jeweils feste Federkennlinie bzw. Dämpfungscharakteristik für alle Drehzahlen und Auslenkungen des schwingeneden Aggregats eingehalten werden muß. Vielmehr können diese Parameter nunmehr kontinuierlich an die jeweiligen Betriebserfordernisse angepaßt werden.

Weiter Einzelheiten, Merkmale und Vorteile der vorliegenden Erfindung ergeben sich aus der nachfolgenden Beschreibung unter Bezugnahme auf die Zeichnung.

Darin zeigen
- Fig. 1: eine schematische Ansicht eines Haushaltgerätes mit einer Trommel und einem berührungsfrei gelagerten oberen Mantel;
- Fig. 2: eine Seitenansicht eines erfindungsgemäßen Haushaltgeräts mit einer alternativen Ausführungsform der Trommelmantellagerung.

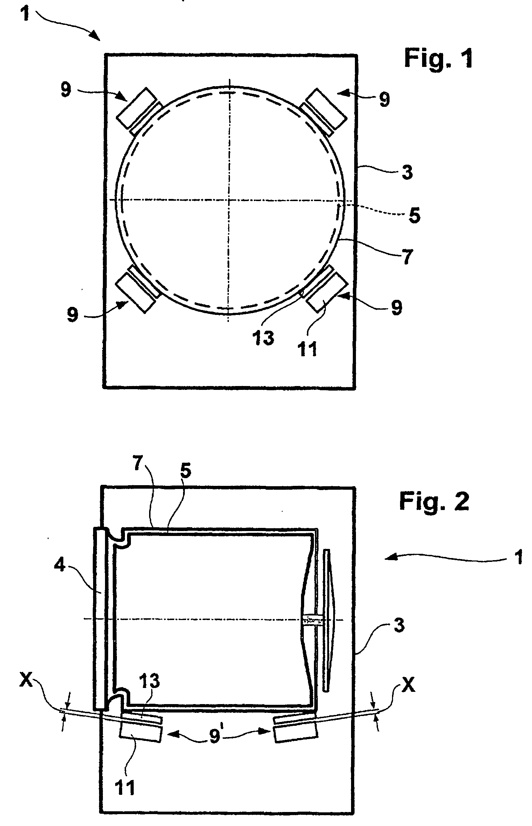

In Figur 1 ist auf sehr schematische Weise ein erfindungsgemäßes Haushaltgerät 1 dargestellt. In üblicher Weise weist das Haushaltgerät 1 ein Gehäuse 3 auf, in dem eine Trommel 5 angeordnet ist, die von einem Trommelmantel 7 umgeben ist.

Wie aus Figur 1 ersichtlich, sind vier Magnetanordnungen 9 gleichmäßig am Umfang des Trommelmantels 7 verteilt angeordnet. Eine jede Magnetanordnung 9 ist aus zwei Magneten 11 und 13 gebildet, die einander gegenüberliegend angeordnet sind.

In Figur 2 ist eine alternative Ausführungsform dargestellt. Wie ersichtlich, weist das Gehäuse 3 des Haushaltgeräts 1 eine Öffnung 4 auf, durch die die Trommel 5 mit Wäsche be- und entladen werden kann.

Wie ersichtlich, sind zwei Teilmagnetanordnungen 9' vorgesehen, die unter einem Winkel zueinander angeordnet sind. Mit Hilfe dieses winkeligen Anordnens der Magnetanordnungen 9' wird eine stabilere Lageranordnung erreicht.

Zwischen den Magneten 11 und 13 ist ein Luftspalt X ausgebildet, der den Abstand bzw. Federungsweg X darstellt. Dieser kann entsprechend eingestellt werden. Die Magnete 11 und 13 stoßen sich ab, so daß eine Berührung sicher vermieden wird.

Mit der vorliegenden Erfindung wird somit ein Haushaltgerät geschaffen, das sich durch eine einfache Lagerung auszeichnet, durch die der Energieverbrauch des Haushaltgeräts erheblich reduziert werden kann. Zudem wird eine erheblich ruhigere und geräuscharmere Betriebsweise, insbesondere bei höheren und hohen Drehzahlen erreicht. Zudem kann aufgrund der geringen Baugröße der Lagerung die Gesamtbaugröße des Haushaltgeräts verringert werden.

## Patentansprüche

1. Haushaltgerät (1), insbesondere Waschmaschine, Waschtrockner oder Trockner, mit einem Gehäuse (3), in dem eine drehbar gelagerte Trommel (5) zur Aufnahme von zu behandelndem Wäschegut und ein die Trommel (5) umgebender Mantel (7) vorgesehen ist, wobei innerhalb des Trommelmantels (7) Waschlauge zu- und/oder abführbar ist, **dadurch gekennzeichnet, dass** der Trommelmantel (7) mittels einer Magnetschwebeanordnung (9, 9') berührungsfrei in dem Gehäuse (3) gelagert ist.

2. Haushaltgerät nach Anspruch 1, **dadurch gekennzeichnet, daß** die Magnetschwebeanordnung wenigstens drei, bevorzugt vier Magnetanordnungen (9) aufweist.

3. Haushaltgerät nach Anspruch 2, **dadurch gekennzeichnet, daß** die Magnetanordnungen (9) am Umfang des Trommelmantels (7) gleichmäßig verteilt angeordnet sind.

4. Haushaltgerät nach Anspruch 2 oder 3, **dadurch gekennzeichnet, daß** jede Magnetanordnung (9, 9') wenigstens zwei Magnete (11, 13) aufweist.

5. Haushaltgerät nach Anspruch 4, **dadurch gekennzeichnet, daß** die beiden Magnete (11, 13) einer Magnetanordnung (9, 9') derart ausgebildet sind, daß sie sich voneinander abstoßen.

6. Haushaltgerät nach Anspruch 4 oder 5, **dadurch gekennzeichnet, daß** einer der Magnete (13) einer Magnetanordnung (9, 9') mit dem Trommelmantel und der andere (11) mit dem Gehäuse (3) verbunden ist.

7. Haushaltgerät nach einem der Ansprüche 4 bis 6, **dadurch gekennzeichnet, daß** der Abstand (X) der beiden Magnete (11, 13) einer Magnetanordnung (9, 9') voneinander einstellbar ist.

8. Haushaltgerät nach einem der Ansprüche 2 bis 7, **dadurch gekennzeichnet, daß** die Magnetanordnung (9') zwei Paare von Magneten (11, 13) aufweist.

9. Haushaltgerät nach Anspruch 8, **dadurch gekennzeichnet, daß** die beiden Magnetpaare (9'-Figur 2) unter einem Winkel angeordnet sind.

10. Haushaltgerät nach einem der vorstehenden Ansprüche, **dadurch gekennzeichnet, daß** die oder ein Teil der verwendeten Magnete (9, 9') fremdgespeiste Elektromagnete sind.

## Claims

1. Domestic appliance (1), particularly washing machine, washer-drier or drier, with a housing (3) in which a rotatably mounted drum (5) for receiving laundry stock to be treated and a casing (7) surrounding the drum (5) are provided, wherein washing solution can be fed and/or discharged within the drum casing (7), **characterised in that** the drum casing (7) is mounted in the housing (3) in contact-free manner by means of a magnet suspension arrangement (9, 9').

2. Domestic appliance according to claim 1, **characterised in that** the magnet suspension arrangement comprises at least three, preferably four, magnet arrangements (9).

3. Domestic appliance according to claim 2, **characterised in that** the magnet arrangements (9) are arranged to be uniformly distributed at the circumference of the drum casing (7).

4. Domestic appliance according to claim 2 or 3, **characterised in that** each magnet arrangement (9, 9') comprises at least two magnets (11, 13).

5. Domestic appliance according to claim 4, **characterised in that** the two magnets (11, 13) of a magnet arrangement (9, 9') are constructed in such a manner that they mutually repel.

6. Domestic appliance according to claim 4 or 5, **characterised in that** one of the magnets (13) of a magnet arrangement (9, 9') is connected with the drum casing and the other one (11) of the magnets is connected with the housing (3).

7. Domestic appliance according to one of claims 4 to 6, **characterised in that** the spacing (X) of the two magnets (11, 13) of a magnet arrangement (9, 9') from one another is settable.

8. Domestic appliance according to one of claims 2 to 7, **characterised in that** the magnet arrangement (9') comprises two pairs of magnets (11, 13).

9. Domestic appliance according to claim 8, **characterised in that** the two magnet pairs (9', Figure 2) are arranged at an angle.

10. Domestic appliance according to one of the preceding claims, **characterised in that** the or a part of the magnets (9, 9') used are externally powered electromagnets.

## Revendications

1. Appareil ménager (1), en particulier machine à laver, machine à laver et à sécher ou séchoir, comportant une carcasse (3) dans laquelle sont prévus un tambour (5) monté mobile en rotation pour accueillir du linge à traiter ainsi qu'une enveloppe (7) entourant le tambour, de la lessive pouvant être amenée à l'intérieur de l'enveloppe (7) du tambour et/ou pouvant en être évacuée, **caractérisé en ce que** l'enveloppe (7) du tambour est logée sans contact dans la carcasse (3) au moyen d'un dispositif de sustentation magnétique.

2. Appareil ménager selon la revendication 1, **caractérisé en ce que** le dispositif de sustentation magnétique comprend au moins trois et de préférence quatre ensembles d'aimants (9).

3. Appareil ménager selon la revendication 2, **caractérisé en ce que** les ensembles d'aimants (9) sont disposés selon une répartition uniforme sur le pourtour de l'enveloppe (7) du tambour.

4. Appareil ménager selon la revendication 2 ou 3, **caractérisé en ce que** chaque ensemble d'aimants (9, 9') comprend au moins deux aimants (11, 13).

5. Appareil ménager selon la revendication 4, **caractérisé en ce que** les deux aimants (11, 13) d'un ensemble d'aimants (9, 9') sont réalisés de manière telle qu'ils se repoussent.

6. Appareil ménager selon la revendication 4 ou 5, **caractérisé en ce que** l'un (13) des aimants d'un ensemble d'aimants (9, 9') est relié à l'enveloppe du tambour et l'autre (11) est relié à la carcasse (3).

7. Appareil ménager selon l'une des revendications 4 à 6, **caractérisé en ce que** la distance (X) entre les deux aimants (11, 13) d'un ensemble d'aimants (9, 9') est ajustable réciproquement.

8. Appareil ménager selon l'une des revendications 2 à 7, **caractérisé en ce que** l'ensemble d'aimants (9') comporte deux paires d'aimants (11, 13).

9. Appareil ménager selon la revendication 8, **caractérisé en ce que** les deux paires d'aimants (9' - figure 2) sont positionnés de manière à former un angle.

10. Appareil ménager selon l'une des revendications précédentes, **caractérisé en ce que** les aimants ou une partie des aimants utilisés (9, 9') sont des électroaimants à alimentation externe.
